# EUROPEAN PATENT APPLICATION

(11) **EP 2 713 296 A1**
(43) Date of publication of application: **02.04.2014**
(21) Application number: 12789976.3
(22) Date of filing: 18.05.2012
(51) Int. Cl.: G06F 21/20, G06F 21/24, H04N 7/173

(54) **BROADCAST-COMMUNICATION COORDINATION RECEIVING DEVICE AND BROADCAST-COMMUNICATION COORDINATION SYSTEM**

(30) Priority: 20.05.2011 JP 2011114223
(71) Applicant: Nippon Hoso Kyokai, Tokyo 150-8001 (JP)
(72) Inventor: FUJII Arisa, Tokyo 157-8510 (JP); OTSUKI Kazuhiro, Tokyo 157-8510 (JP); YAMAMURA Chigusa, Tokyo 157-8510 (JP)
(74) Representative: Tomlinson, Kerry John
(86) International application number: PCT/JP2012/062808
(87) International publication number: WO 2012/161121

(57) **Abstract**

To provide a broadcast-communication coordination receiving device having an excellent operability and that allows a plurality of users to manage individual personal information and use an application. A broadcast-communication coordination receiving device (400) is provided with: a broadcast receiving means (401); an application server (300); a communication transceiving means (406) for performing transceiving to and from an authentication server (500); a decoding means (40); and a composite display means (415); and is further provided with: an application startup information extraction means (402a); an application startup information storage means (405); an application acquisition means (411); an application management and execution control means (409); an application execution means (413); a user account information storage means (426); and an application usage information management control means (420).

## Description

### Technical Field

The present invention relates to a technology for account management of user individuals in providing a hybrid service that integrates broadcast and communication. The present application claims the priority of Japanese Patent Application No. 2011-114223 filed on May 20, 2011 in Japan, the contents of which are incorporated herein by reference.

### Background Art

Today, television receivers used at ordinary homes are in an environment where video and application are delivered and usable via respective transmission media for broadcast and the Internet. Particularly, making use of the respective advantages of digital broadcast and broadband communication, a television receiver is in a state that various services are realized by executing applications regardless of presence or absence of association with video.

Depending on the kind of an executed application, individual authentication (login) is required on a television receiver. Accordingly, in using an application that requires individual authentication, input are the user name, the password, or the like of a user from the television receiver, and the application is thereby executed.

On the other hand, on a personal computer used by being connected to a communication line, in obtaining an application via the communication line by operation, the user name and the password of a user are input, which is nowadays carried out, and for a different service, a password registered corresponding to the different service is input. Incidentally, it is very painstaking for a user to input a user name and a password for each service. Accordingly, arrangement is made on a computer such that input information of a previous time is recorded and stored for each user, and input of a user name and a password can be automatically complemented at the time of using a service.

### Related Art Document

### Patent Document

Patent Document 1: Japanese Patent Application Laid-Open No. 2005-321970

### Disclosure of the Invention

### Problem to be Solved by the Invention

However, in case that plural users respectively use different applications at home as described above, protection of individual information of each user individual is not made because existing receivers are not configured such as to separate individual information of a user individual from individual information of other user individuals in using individual information.

The present invention has been developed to solve the above-described problem, and an object of the invention is to provide an integrated broadcasting communications receiver that enables using applications such that plural users manage respective pieces of individual information, and is excellent in operability.

### Means for Solving the Problem

An integrated broadcasting communications receiver according to the present invention is configured as follows to solve the above-described problem. That is, the integrated broadcasting communications receiver is provided with a broadcast receiving unit for receiving broadcast data via broadcast wave, a communication transmitting/receiving unit that is connected with an application server, the application server providing an application, to transmit/receive communication data via a communication line connected with an authentication server for performing user individual authentication for execution of the application, a decoding unit for decoding image/audio and data broadcast from broadcast data received by the broadcast receiving unit, and a composing and displaying unit for synthesizing video decoded by the decoding unit and video created by the obtained application, and the integrated broadcasting communications receiver includes an application activation information extracting unit, an application activation information storing unit, an application obtaining unit, an application management/execution controlling unit, an application execution unit, a user account information storing unit, and an application-usage information management control unit.

With this configuration, the integrated broadcasting communications receiver receives broadcast data such as video/audio, data broadcast, or the like by the broadcast receiving unit, and exchanges information with an application server or an authentication server, or the like via the communication line by the communication transmitting/receiving unit. By the application activation information extracting unit and from broadcast wave or communication data, the integrated broadcasting communications receiver extracts application activation information including control information for controlling execution operation of an application and obtaining source information indicating the obtaining source of the application, and controls the application activation information storing unit to store the extracted application activation information. Further, on the integrated broadcasting communications receiver, according to user operation or description in application activation information, the application management/execution controlling unit instructs the application obtaining unit and the application-usage-information management controlling unit to make a request for obtaining an application, and the application-usage-information management controlling unit performs transmitting or receiving information to/from the application server or the authentication server via the communication receiving unit so as to obtain the application. Then, the integrated broadcasting communications receiver makes the application storing unit store the application obtained by the application obtaining unit or directly executes the application by an instruction from the application execution unit. Incidentally, the integrated broadcasting communications receiver is arranged such that, in obtaining an application, when the application-usage-information management controlling unit transmits or receives information, such as login, to/from an application server and the authentication server, a piece of user individual information such as a user ID, a password, or the like of a user individual is individually stored in the user account information storing unit so that the piece of user individual information cannot be freely used by another person, for example, in a family.

Further, on the integrated broadcasting communications receiver, the application-usage-information management controlling unit may include: a login user temporal storing unit for temporarily storing a piece of individual identification information, the piece of individual identification information being selected and specified from outside; and a user account management controlling unit for performing control such that the login user temporal storing unit temporarily stores the specified piece of the individual identification information, the piece of the user individual information corresponding to the piece of the individual identification information stored in the login user temporal storing unit is selected from the user account information storing unit and added to an application using request made to the application server.

With this configuration, on the integrated broadcasting communications receiver, the user account management controlling unit temporarily stores individual identification information selected and specified from outside such that the individual identification information is deleted at a predetermined timing of, for example, termination of the application, turn-off of power, or the like. In case that the integrated broadcasting communications receiver makes a request for using an application to an application server, the user account management controlling unit selects a piece of user individual information, which is corresponding to the piece of individual identification information stored in the login user temporal storing unit, from the user account information storing unit, adds the selected piece of user individual information to the request for using the application, and thus transmits the piece of user individual information to the application server via the application obtaining unit.

Further on the integrated broadcasting communications receiver, the application-usage-information management controlling unit may further include: a session information temporal storing unit for temporarily storing certification information that is a result of authentication by the authentication server, the result being extracted from an authentication completion notification that the application server is notified of by the authentication server via the receiver; and a session information management controlling unit that extracts the certification information from the authentication completion notification, controls the session information temporal storing unit to store the certification information, and adds the certification information stored in the session information temporal storing unit to a user authentication request transmitted from the application server.

With this configuration, on the integrated broadcasting communications receiver, in executing applications, which require user authentication, simultaneously, continuously, or intermittently during a time from when power is turned on until when power is turned off, it is possible to omit the work of performing login operation each time.

That is, on the integrated broadcasting communications receiver, the application-usage-information management controlling unit extracts certification information, which is a result of authentication by the authentication server, from a redirect that the application server is notified of by the authentication server, and the session information temporal storing unit temporarily stores the certification information such that the certification information is deleted, for example, by termination of the application or turn-off of power. Then, by the application-usage-information management controlling unit, the integrated broadcasting communications receiver adds the temporarily stored certification information to a user authentication request transmitted from the application server. Incidentally, the authentication server makes authentication and notifies the application server of the authentication by redirect such that the application server can provide the application to the user individual, based on the user authentication request having the added certification information. Accordingly, if certification information is once extracted and stored in the session information temporarily storing unit, in using another application that is different from the currently used application further continuously during a series of operations, the integrated broadcasting communications receiver, in response to a user authentication request transmitted from another application server, transmits the user authentication request, adding the stored certification information to the user authentication request. Thus, a user individual who uses applications can perform operation of so-called single sign on (SSO) without performing login operation.

Further, on the integrated broadcasting communications receiver, upon reception of an application termination signal for terminating the application in the execution operation from the application management/execution controlling unit, the user account management controlling unit and the session information management controlling unit may delete the individual identification information that corresponds to the application and is temporarily stored in the login user temporal storing unit, and delete the certification information that corresponds to the application and is temporarily stored in the session information temporal storing unit.

With this configuration, on the integrated broadcasting communications receiver, when the user account management controlling unit and the session information management controlling unit have received an application termination signal for terminating the application from the application management/execution controlling unit, the user account management controlling unit deletes the individual identification information that corresponds to the application termination signal and is temporarily stored in the login user temporal storing unit, and the session information management controlling unit deletes the certification information that corresponds to the application termination signal and is temporarily stored in the session information temporal storing unit.

Still further, an integrated broadcasting communications system, the integrated broadcasting communications system being connected with a communication line to link broadcast with communication, includes: an application server that is connected to the communication line and provides an application; an authentication server that is connected to the communication line and performs user individual authentication for execution of the application; the integrated broadcasting communications receiver according to any one of claims 1 to 4; and a broadcast transmitting apparatus that transmits broadcast data to the integrated broadcasting communications receiver.

With this configuration, upon reception of a login request or the like from an application server and the authentication server, the integrated broadcasting communications receiver used by the integrated broadcasting communications system can control execution of applications, individually managing the respective pieces of individual information of user individuals who use applications. Thus, the respective pieces of individual information of the user individuals are prevented from leaking, and the operability of the integrated broadcasting communications receiver is excellent.

### Advantages of the Invention

An integrated broadcasting communications receiver and an integrated broadcasting communications system according to the present invention have the following excellent advantages.

Even in a case that the number of user individuals who view in a house is plural, the integrated broadcasting communications receiver enables using applications with the application-usage-information management controlling unit and the user account information storing unit, maintaining a state that respective pieces of individual information are independent from others.

On the integrated broadcasting communications receiver, individual identification information is temporarily stored in the login user temporal storing unit such as to be deleted, for example, by termination of application or turn-off of power, and further, the user account information storing unit, in which user individual information corresponding to the individual identification information temporarily stored in the login user temporal storing unit is stored, is controlled by the user account management controlling unit, in response to a request by an application server or the authentication server. Thus, it possible to protect user individual information and prevent it from being used by others.

By the session information management controlling unit, the integrated broadcasting communications receiver extracts certification information, if any, from a redirect that an application server is notified of by the authentication server and controls the session information temporal storing unit to temporarily store the certification information so as to transmit a user authentication request having been transmitted from the application server, adding the certification information to the user authentication request. Accordingly, once a user logs in and authentication is made, it is possible to use the integrated broadcasting communications receiver by so-called SSO, which does not require login operation plural times, even when another application that requires user authentication is used.

On the integrated broadcasting communications receiver, upon reception of an application termination signal from the application management/execution controlling unit, the user account management controlling unit and the session information management controlling unit delete the individual identification information that is temporarily stored in the login user temporal storing unit, and delete the certification information that is temporarily stored in the session information temporal storing unit. As user individual information is thus managed, the user individual information can be protected.

By the application-usage-information management controlling unit of the integrated broadcasting communications receiver, the integrated broadcasting communications system performs control so that a piece of user individual information cannot be used by another user individual from the user account information storing unit. Thus, it is possible to protect user individual information, in response to a request by an application server and the authentication server, and execute an application. Further, in the integrated broadcasting communications system, even when plural applications that require user authentication are used by the integrated broadcasting communications receiver, it is possible to use the applications by so-called SSO, which does not require login operation plural times.

### Brief Description of the Drawings

FIG. 1 a schematic diagram schematically showing an integrated broadcasting communications system according to the present invention;
FIG. 2 is a block configuration diagram schematically showing an entire integrated broadcasting communications receiver according to the present invention;
FIG. 3 is a schematic diagram schematically showing data of each user stored in the user account information storing unit of the integrated broadcasting communications receiver according to the present invention;
FIG. 4 is a data structure diagram for illustration of the structure of an EIT;
FIG. 5 is a data structure diagram for illustration of an example where application activation information, which is used by the integrated broadcasting communications receiver according to the present invention, is described by an application activation information descriptor, in a binary format, of the EIT;
FIG. 6 is a diagram showing the contents of control codes (application control codes) described in the application activation information used by the integrated broadcasting communications receiver according to the present invention;
FIG. 7 is a sequence diagram showing the flow of information between the integrated broadcasting communications receiver, an application server, and an authentication server in the integrated broadcasting communications system according to the present invention;
FIG. 8 is a flowchart showing the operation of the integrated broadcasting communications receiver according to the present invention in case of executing an application that requires authentication;
FIG. 9 is a flowchart showing the operation of the integrated broadcasting communications receiver according to the present invention in case of executing an application that requires authentication; and
FIGS. 10 (a) to (d) are schematic diagrams schematically showing the stages of executing an application, the stages being shown in display states of a video displaying device, in case that authentication is required when a user logs in on the integrated broadcasting communications receiver according to the present invention.

### Embodiment for Carrying Out the Invention

In the following, an integrated broadcasting communications system and an integrated broadcasting communications receiver according to the present invention will be first described, referring to the drawings. Incidentally, the integrated broadcasting communications receiver will be described on assumption that application is controlled by application information table (AIT). Further, application may be described as APL or appli.

### [Configuration of Integrated Broadcasting Communications System]

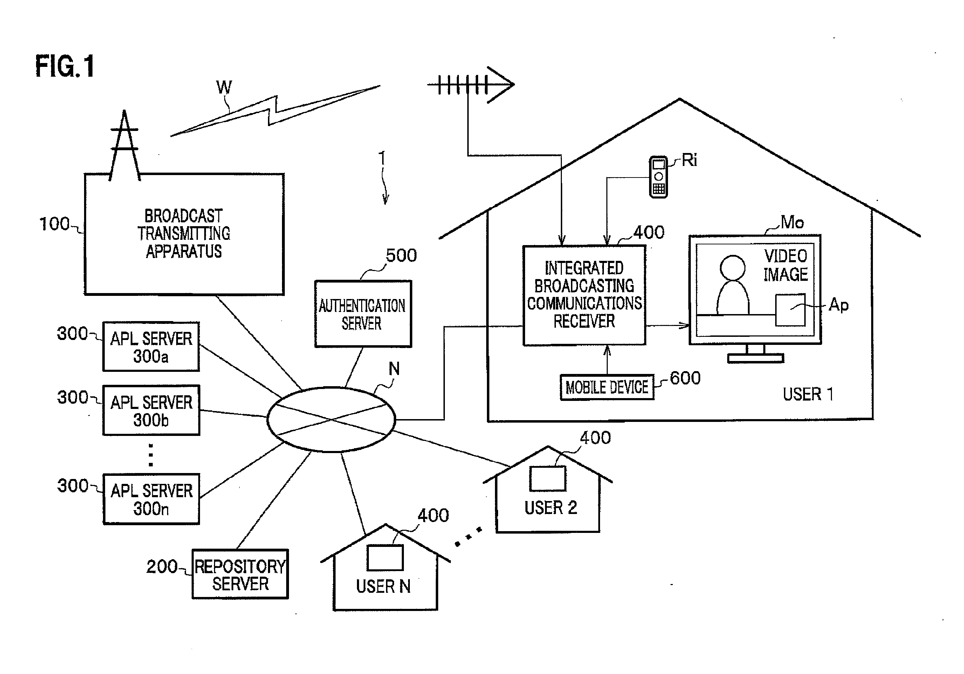

First, the configuration of the integrated broadcasting communications system will be described, referring to FIG. 1.

As shown in FIG. 1, an integrated broadcasting communications system 1 is a system that is, in using an application by integrating broadcast with communication, capable of managing individual information even when there are plural user individuals in a user household and enabling a user to receive plural services by SSO.
Incidentally, the integrated broadcasting communications system 1 is one that is also capable of presenting applications associated with allocated channels (channel-associated applications) and applications not associated with the allocated channels (non-channel-associated applications). Applications, which are used herein, refer to software (or cross-browser (a displayed browser) data of documents, images, scripts) that operates, with a later-described integrated broadcasting communications receiver 400 as the execution environment. Further, broadcast images are data, such as A/V contents, reproduced by the integrated broadcasting communications receiver 400.

As shown in FIG. 1, the integrated broadcasting communications system 1 includes a broadcast transmitting apparatus 100, a repository server (application activation information server) 200, application servers 300 (300a, 300b, ..., 300n), integrated broadcasting communications receivers 400, and an authentication server 500.
Incidentally, the integrated broadcasting communications receivers 400 can also be arranged such as to operate in linkage with a mobile device 600, for example, such as a mobile phone.

The broadcast transmitting apparatus 100 is installed at a broadcast station, and transmits broadcast programs (contents) accompanying program allocation to an integrated broadcasting communications receiver 400 via a broadcast wave W.
Incidentally, a broadcast program may be transmitted by radio wave as broadcast wave W, and may be transmitted via a communication line (network) N. Herein, description will be made, taking an example of transmission by broadcast wave W.

Further, in case that there is an application associated with an allocated channel or in case that there is an application desired to be used, the broadcast transmitting apparatus 100 adds application activation information to broadcast wave W, the application activation information being necessary for control of the application, and thus transmits the application activation information to an integrated broadcasting communications receiver 400.

Herein, application activation information refers to information such as the identifier (ID) of an application, a location of the application, or the like for specifying the application, and additional information for control of the application.

The repository server (application activation information server) 200 is a server that provides application activation information.
The repository server 200 manages application activation information that is not transmitted from the broadcast station. The repository server 200 is installed at an authentication organization (a third party organization) that verifies applications created in advance, for example, by service providers and holds only application activation information corresponding to applications (A [Authorized] application) that the authentication organization has authorized. Or, the repository server 200 may be one that also holds application activation information corresponding to applications or the like having been created by service providers (including general users), the applications having not been authorized by an authentication organization.

The application servers 300 (300a, 300b, ..., 300n) are servers that provide applications created by service providers. The application servers 300 are herein assumed to be held by individual service providers, but also may be installed at the broadcast station or a third organization. Upon a request by the integrated broadcasting communications receiver 400 to provide an application, an application server 300 requests user authentication if user authentication is required on the application to be provided. Then, when a user individual who has been authenticated as a user is confirmed by certification information upon reception of a redirect from the authentication server 500, the application server 300 issues session information to provide the application to the integrated broadcasting communications receiver 400.

This application reserved in this application server 300 is downloaded and executed by the integrated broadcasting communications receiver 400.

Incidentally, session information is a unique code issued for a communication path between an application server 300, for which user confirmation has been made on a user individual by authentication information, and an integrated broadcasting communications receiver 400. Authentication information is data having a user individual ID and certification information in a pair, wherein the user individual ID and the certification information certify a valid user individual for an application. Further, certification information is information having been officially specified, such as a password, a certificate, finger print data or the like, and identifies a user individual.

The integrated broadcasting communications receiver 400 provides a broadcast program to a viewer, operates an application (channel-associated application) associated with an allocated channel or an application (non-channel-associated application) not associated with an allocated channel, and thus provides the application to the viewer. The configuration and the operation of an integrated broadcasting communications receiver 400 will be described later in detail.

The authentication server 500 is a server that responds to an inquiry about user authentication from an application server 300. The authentication server 500 responds to a request for user authentication transmitted by a redirect from an application server 300 via an integrated broadcasting communications receiver 400, notifying whether or not the user individual, on which an inquiry has been made, has been authenticated. Upon reception of an inquiry transmitted via the integrated broadcasting communications receiver 400 by redirect, the inquiry regarding a request, for example, by an application server 300 for user authentication of a user individual, the authentication server 500 determines whether or not certification information is present on the user individual who is using the integrated broadcasting communications receiver 400 and whom the inquiry has been made on. If certification information is not present, the authentication server 500 requests authentication information such as a password from the integrated broadcasting communications receiver 400, and if certification information is present, an authentication completion notification is delivered from the integrated broadcasting communications receiver 400 to the application server 300.

That is, the authentication server 500 receives a user authentication request, on a user individual (1a), transmitted from an application server 300 via the integrated broadcasting communications receiver 400 (redirect), and determines presence or absence of certification information on the user individual (1a) in the received user authentication request. Then, the authentication server 500 requests the integrated broadcasting communications receiver 400 to transmit authentication information such as a password in case the authentication server 500 has determined that certification information is absent. Then, when the user individual (1a) who uses the application logs in and certification information on the user individual (1a) is transmitted from the integrated broadcasting communications receiver 400, the authentication server 500 searches the service provider ID of the application server 300, the user individual ID, and the password in a list stored in advance, and authenticates and issues certification information if a search result is correct. Further, the authentication server 500 adds the issued certification information to a redirect URL and an authentication response and thus transmits the certification information to the application server 300 via the integrated broadcasting communications receiver 400 (redirect). Incidentally, the authentication server 500 periodically receives, from the application servers 300, and stores a list in which user individual IDs, passwords, and accounts are linked with each other

In response to an inquiry about user authentication from the application server 300, the authentication server 500 performs authentication from information on the user individual to thereby answer the application server 300 by redirect. Accordingly, for an application that requires user authentication, the later-described integrated broadcasting communications receiver 400 enables so-called SSO operation, which requires a user individual to perform login operation only once in order that the authentication server 500 performs delivery of information by intervening between the integrated broadcasting communications receiver 400 and the application server 300 for execution of the application during a time from when power is turned on until when power is turned off. Incidentally, operations related to the authentication server 500 and the integrated broadcasting communications receiver 400 will be described later in detail.

With such a configuration of the integrated broadcasting communications system 1, on the integrated broadcasting communications receiver 400, a viewer (user) can view broadcast programs provided by the broadcast station and also make applications (channel-associated applications, non-channel-associated applications) operate, the applications being provided by service providers or the like. Further, for a case of using an application that requires user authentication of a user individual of the integrated broadcasting communications receiver 400, arrangement is made such that when an application server 300 has requested user authentication, authentication is obtained by using the authentication server 500. Thus, operability in executing the application on the integrated broadcasting communications receiver 400 is excellent, and protection of user individual information can be attained as described later.

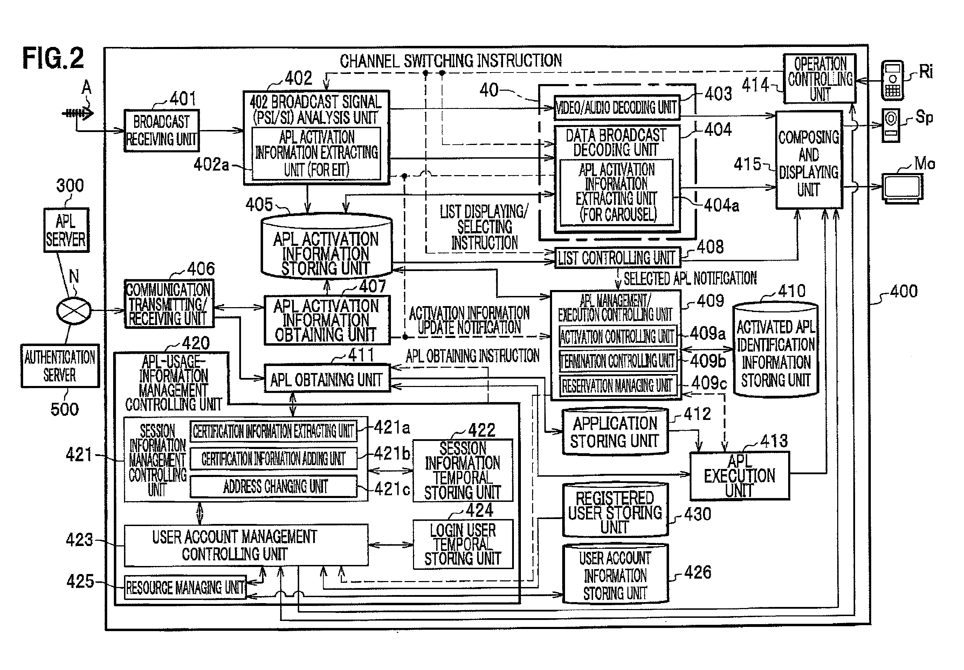

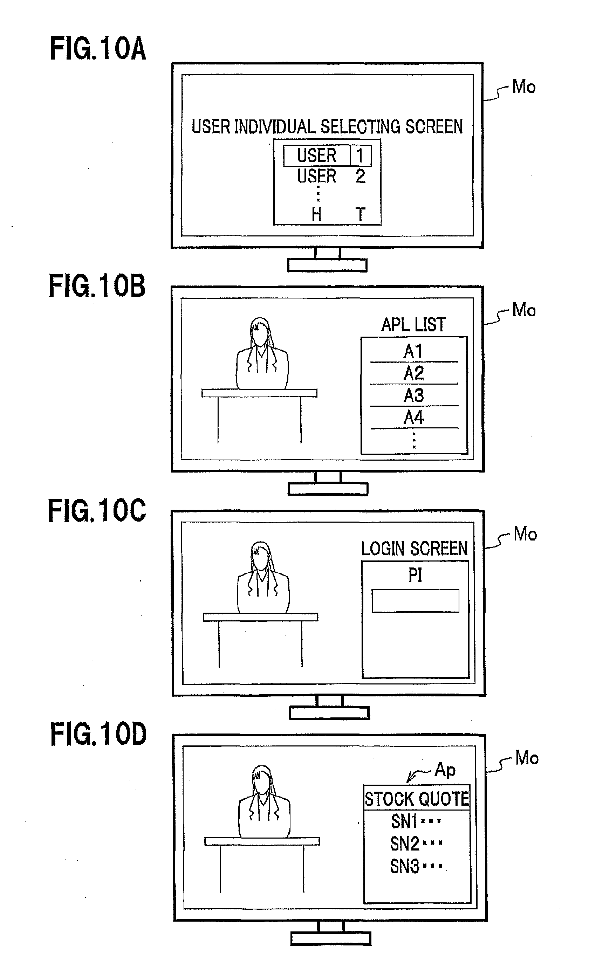

The configuration and the operation of the integrated broadcasting communications receiver 400 will be described below. Incidentally, by this configuration, application activation information is extracted from broadcast wave W (extraction from a broadcast signal analysis unit 402 and extraction from a data broadcast decoding unit 404) or obtained by communication (application activation information obtaining unit 407), which are all shown. The following description will be made, taking an example that application activation information is transmitted, being disposed in the event information table (EIT) of broadcast wave W.
Further, in FIG. 2, a user individual selecting screen (see FIG. 10(a)) may be implemented by activating one transmitted by broadcast wave W, may be provided as a basic function, or may be activated by application-usage-information management controlling unit 420.

As shown in FIG. 2, the integrated broadcasting communications receiver 400 recognizes an application, which operates in association with or not in association with an allocated channel, from application activation information located in the event information table (EIT) in a signal of digital broadcast transmitted via the broadcast wave W.

Herein, as shown in FIG. 2, the integrated broadcasting communications receiver 400 includes a broadcast receiving unit 401, a broadcast signal analysis unit 402, a video/audio decoding unit 403, a data broadcast decoding unit 404, communication transmitting/receiving unit 406, application activation information obtaining unit 407, an application activation information storing unit 405, list controlling unit 408, application management/execution controlling unit 409, an activated application identification information storing unit 410, application obtaining unit 411, an application storing unit 412, application execution unit 413, operation controlling unit 414, a composing and displaying unit 415, an application-usage-information management controlling unit 420, a registered user storing unit 430, and user account information storing unit 426.

The broadcast receiving unit 401 receives broadcast data that is transmitted as broadcast wave W via antenna A.
The broadcast receiving unit 401 receives and demodulates broadcast data, performs error correction and decoding, such as TMCC (Transmission and Multiplexing Configuration Control) decoding, and outputs a result as a transport stream (TS) of MPEG2 to the broadcast signal analysis unit 402.

Incidentally, the broadcast receiving unit 401 is not limited to a unit that receives broadcast signals by radio wave via antenna A, and may be a unit that receives broadcast signals via a cable.

The broadcast signal analysis unit 402 analyzes PSI/SI (Program Specific Information/ Service Information) in the stream data (transport stream) demodulated by the broadcast receiving unit 401, and extracts data including video, audio, data for a currently or presently selected allocated channel. Incidentally, channel selection is performed, based on a channel switching instruction that is transmitted from the later-described operation controlling unit 414.

The broadcast signal analysis unit 402 outputs data in a PES (Packetized Elementary Stream) format, which is extracted data of video, audio, or the like, to the video/audio decoding unit 403, and outputs data in a section format, which is extracted data of data broadcast or the like, to the data broadcast decoding unit 404.

The broadcast signal analysis unit 402 is provided with application activation information extracting unit 402a.

From the stream data demodulated by the broadcast receiving unit 401, the application activation information extracting unit 402a extracts application activation information that is included in the descriptors (application activation information descriptor) of EIT, which is a part of SI (Service Information). This EIT is created by that the broadcast transmitting apparatus 100 (see FIG. 1) writes in application activation information corresponding to an application linked with an allocated channel into the descriptor area of the EIT by a program information writing unit, not shown, of the broadcast transmitting apparatus 100.

The application activation information extracting unit 402a writes and stored the extracted application activation information into the application activation information storing unit 405. Further, when the application activation information extracting unit 402a has extracted application activation information, the application activation information extracting unit 402a notifies the application management/execution controlling unit 409 of that the application activation information extracting unit 402a has been notified of application activation information (activation information notification) together with information for identifying application (Application ID).

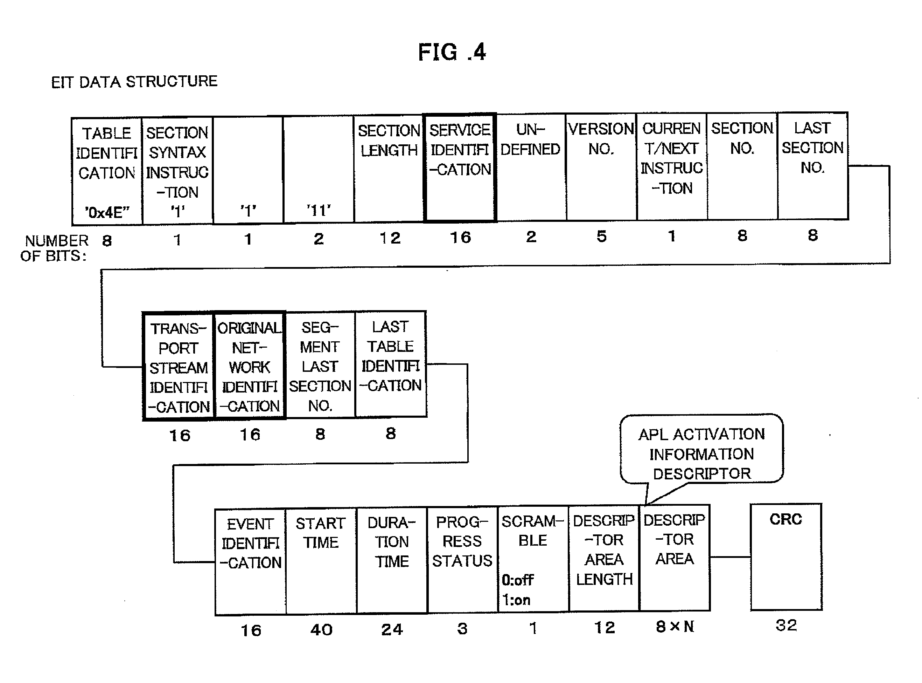

Referring to FIG. 4, an example of a data structure of EIT in which application activation information is written will be described below. FIG. 4 shows an example in which application activation information is added to EIT which is specified by ARIB STD-B10. Herein, application activation information is added to the descriptor area of EIT as 'application activation information descriptor'.

This EIT is time-series information on events included in allocated service. Incidentally, as this EIT, it is preferable to use a p/f EIT ('table identification' = 0 x 4E) that represents a table in which current (present)/ next (following) event information is added to the transport stream thereof. Thus, without changing the structure of an existing EIT, it is possible to transmit application activation information to the integrated broadcasting communications receiver 400, in a data amount smaller than the data amount of a schedule EIT that transmits an EIT of all broadcast stations.

Further, as shown in FIG. 4, depending on 'original network identification', 'transport stream identification', or 'service identification' of the data structure of EIT, an allocated channel corresponding to transmitted application activation information is specified.
'Original network identification' is an identifier for identifying a broadcast network for digital terrestrial broadcasting or BS digital broadcasting.
'Transport stream identification' is an identifier for identifying a transport stream (TS).
'Service identification' is an identifier for identifying an allocated channel for an individual transport stream.

By adding application activation information (application activation information descriptor) to EIT in such a manner, it is possible to recognize application activation information linked to an allocated channel on the integrated broadcasting communications receiver 400.

As other data in the data structure of EIT is specified by ARIB STD-B10, description will be omitted here.

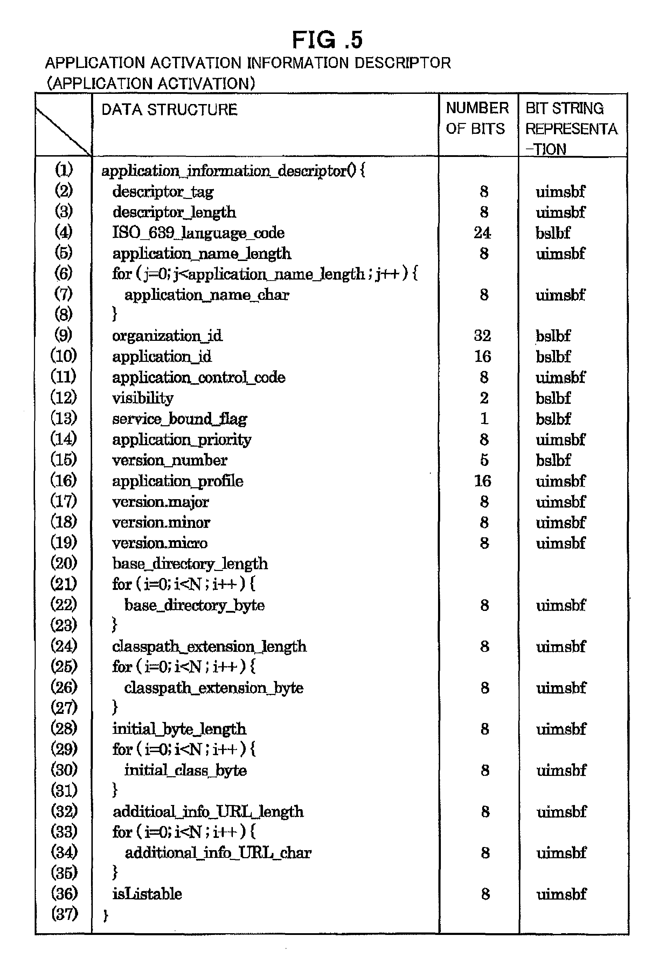

In the following, referring to FIG. 5, the contents of application activation information (application activation information descriptors) added to EIT will be described.
FIG. 5 shows an example of descriptors (application activation information descriptors) describing application activation information in binary format.

Application activation information descriptors are data including information for specifying an application and additional information for controlling the application as well, and is information corresponding to conventional AIT.

Information for specifying an application includes following information.

For example, in FIG. 5, an application name is described on lines (5) to (8). Further, a number for identifying an organization that has created the application is described on line (9) and a number having been uniquely set in the organization to identify an application is described on line (10). These numbers described on lines (9) and (10) are the application ID that uniquely specifies an application.

Further, the location (address) of the application is described by a combination of lines (20) to (23) and lines (28) to (31).
Still further, in addition to these, additional information used by the application, for example, locations (addresses) of metadata, image data and the like may be described as shown on lines (32) to (34). In such a manner, the data amount added to EIT can be reduced by describing the location, of additional data, to be referred to.

Additional information for control of the application includes information as follows.

For example, a control code (application control code) for control of the state of the application is described on line (11) in FIG. 5.

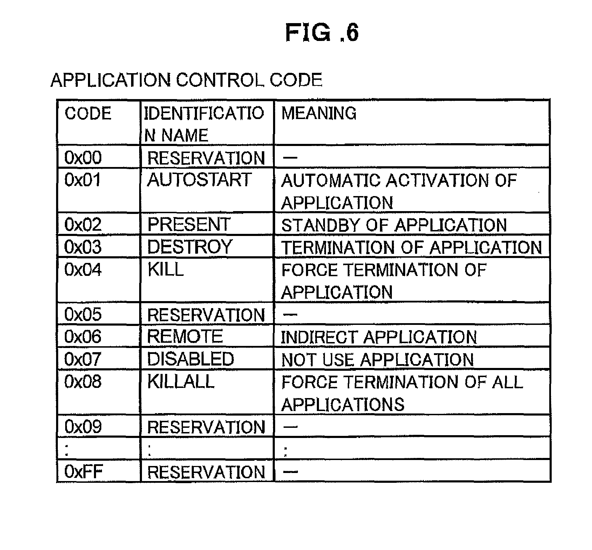

An application control code herein takes values, for example, shown in FIG. 6. An application control code herein is basically similar to one specified by ARIB STD-B23.
For example, 'AUTOSTART' represents an application that automatically starts (immediately starts) on the integrated broadcasting communications receiver 400, not by user operation.
Further 'PRESENT' represents that, though not an application that automatically starts, the application is in a state of allowing activation (standby).

Further, 'DESTROY' and 'KILL' are control codes to instruct termination of application, and respectively represent normal termination (for example, termination by user confirmation) and force termination (for example, immediate termination without user confirmation).

In such a manner, an application control code herein is basically similar to one specified by ARIB STD-B23, however, 'KILLALL' is further added here. 'KILLALL' represents force termination of all applications that are currently in activation on the integrated broadcasting communications receiver 400, without limiting to the application corresponding to an allocated channel.

Further, on line (36) in FIG. 5, described is information (listable flag [isListable]) that represents whether or not the present application can be displayed by a user as a candidate of list display. For example, if this isListable flag is TRUE ('1'), the isListable flag represents an application executable by user selection.
If this isListable flag is FALSE ('0'), the isListable flag represents that the present application is not an application executed by user selection but an application activated from another application (for example, a decoder).

In such a manner, as application activation information is extracted from the p/f area of the event information table, the integrated broadcasting communications receiver 400 can obtain and control an application used by the content of the present broadcast and an application used by the content of the following scheduled broadcast so that applications can be executed in association with contents.

Concretely, the application activation information extracting unit 402a confirms whether or not content corresponding to application activation information shown in FIG. 5 is described in the p/f are of EIT included in TS having been input from the broadcast receiving unit 401. As a result, if the content is described, the content is extracted. The application activation information extracting unit 402a, as shown in FIG. 2, stores extracted content as application activation information in the application activation information storing unit 405, and the application management/execution controlling unit 409 is notified.

Returning to FIG. 2, description of the configuration of the integrated broadcasting communications receiver 400 will be continued.

A decoding unit 40 decodes broadcast data such as image/audio, data broadcast, and the like. The decoding unit 40 is provided with the video/audio decoding unit 403 and the data broadcast decoding unit 404.

The video/audio decoding unit 403 decodes video/audio (video stream and audio stream) extracted by the broadcast signal analysis unit 402. In case that video/audio data is encoded, for example, by a coding scheme of MPEG2, the video/audio decoding unit 403 performs decoding of MPEG2 and outputs the video/audio data as video/audio data in a displayable output format to the composing and displaying unit 415.

The data broadcast decoding unit 404 decodes the data of data broadcast extracted by the broadcast signal analysis unit 402. The data broadcast decoding unit 404 has the function of a BML browser to analyze BML and converts the BML into a displayable output format, and outputs the converted display data (data broadcast data) to the composing and displaying unit 415.

The application activation information storing unit 405 stores application activation information, associating it with channels (allocated channel, virtual channel), and is a storage medium of a semiconductor memory or the like.
Herein, the application activation information extracting unit 402a writes extracted application activation information into the application activation information storing unit 405, associating the application activation information with an allocated channel specified by EIT. Further, non-channel-associated information obtaining unit, not shown, writes obtained application activation information into the application activation information storing unit 405, associating the application activation information with a virtual channel.

The communication transmitting/receiving unit 406 is a communication interface, and transmits and receives various data via the communication line N.

The application activation information obtaining unit 407 obtains application activation information via the communication transmitting/receiving unit 406. The application activation information obtaining unit 407 includes herein a channel-associated information obtaining unit and a non-channel-associated information obtaining unit, not shown.

The channel-associated information obtaining unit obtains, via the communication transmitting/receiving unit 406, application activation information of application (channel associated application) that is associated with an allocated channel. For example, from a predetermined server (the repository server 200 (see FIG. 1)) at the time of startup, the channel-associated information obtaining unit obtains application activation information, for which identifiers for specifying an allocated channel, such as 'original network identifier', 'transport stream identifier', and 'service identifier' are added to the application activation information descriptor described above with reference to FIG. 5. Then, the channel-associated information obtaining unit writes and stores the obtained application activation information into the application activation information storing unit 405, linking the application activation information with the allocated channel.

Further, via the communication transmitting/receiving unit 406, the non-channel-associated information obtaining unit, not shown, obtains application activation information of an application (non-channel-associated application) that is not associated with an allocated channel. For example, from a server (repository server 200 (see FIG. 1)) predetermined at the time of startup, the non-channel-associated information obtaining unit obtains application activation information with the same content as that of the application activation information descriptor described above with reference to FIG. 5, and writes and stores the obtained application activation information into the application activation information storing unit 405. Or, application activation information may be obtained when the non-channel-associated information obtaining unit is notified of an instruction by the user via the later-described operation controlling unit 414 to display the list of applications (list display instruction) has been notified.

Incidentally, application activation information obtained by the non-channel-associated information obtaining unit, not shown, of the application activation information obtaining unit 407 is not linked with a particular allocated channel. In this situation, the non-channel-associated information obtaining unit, not shown, is assumed to write and store application activation information into the application activation information storing unit 405, associating the application activation information with a virtual channel without an allocated channel.

The list controlling unit 408 is a launcher that controls displaying a list of applications that can be activated and selecting an application. Herein, the list controlling unit 408 includes a list displaying unit and a list selecting unit, not shown.

The list displaying unit (not shown) of the list controlling unit 408 displays a list of applications that can be activated.

Upon instruction by the user via the operation controlling unit 414 to display a list, this list displaying unit, not shown, creates a list of applications corresponding to the respective pieces of application activation information stored in the application activation information storing unit 405, and outputs the list to the composing and displaying unit 415 as display data.

The list displaying unit, not shown, displays, for example, the application names described on line (7) of the application activation information described above with reference to FIG. 5.

Incidentally, the list displaying unit, not shown, is assumed to display only a list of applications whose listable flag (isListable) described on line (36) is TRUE ('1') in the application activation information described above with reference to FIG. 5. Thus, the list of applications can be displayed, excluding applications that cannot be activated by a user and are unnecessary.

Further, the list selecting unit (not shown) of the list controlling unit 408 is used to select an application, based on a list selection instruction from the user via the operation controlling unit 414, from a list of applications displayed by list displaying unit, not shown. For example, by being notified of a press-down signal of a direction (arrow) button (not shown) on a remote controller Ri as a list selection instruction via the operation controlling unit 414, a list selecting unit (not shown) recognizes which application is selected as an activation candidate from plural applications. Then, by being notified of a press-down signal of a decision button (not shown), the list selecting unit (not shown) recognizes the application on which an activation instruction has been actually selected.

The list controlling unit 408 (list selecting unit) outputs a selected application notification including a number (application ID) for identifying a selected application to the application management/execution controlling unit 409.

Incidentally, for an application that is not associated with an allocated channel, list selecting unit (not shown) is assumed to prompt a user to select whether to immediately execute the application or whether to select reserving (installing) or not reserving the application on the integrated broadcasting communications receiver 400 (concretely, the application storing unit 412).

In this case, the list selecting unit (not shown) may be provided with check columns on the displayed list of applications to instruct immediate execution and either reserving or not reserving an application, or may inquire the user at the stage when an application has been selected. Information indicating immediate execution and whether or not to reserve this application is assumed to be output to the application management/execution controlling unit 409 together with a selected application notification.

The application management/execution controlling unit 409 controls the life cycle of an application (the process from loading an application, through execution, and until termination). Herein, the application management/execution controlling unit 409 includes activation controlling unit 409a, termination controlling unit 409b, and reservation managing unit 409c. Further, the application management/execution controlling unit 409 is configured to output a signal to the application execution unit 413 when executing and terminating an application, and also output a signal to the application-usage-information management controlling unit 420 when obtaining an application and terminating an application.

The activation controlling unit 409a controls activation of an application associated with an allocated channel (channel-associated application) and activation of an application not associated with an allocated channel (non-channel-associated application).

Concretely, it is assumed that, upon reception of activation information notification from the application activation information extracting unit 402a, the activation controlling unit 409a activates an application only when the application control code described in application activation information is 'AUTOSTART', wherein the application activation information is corresponding to an application ID that the activation controlling unit 409a is notified of together with the activation information notification, and is stored in the application activation information storing unit 405.

That is, only when the application control code is 'AUTOSTART', the activation controlling unit 409a notifies the application obtaining unit 411 of obtaining application (application obtaining instruction) from the location of the application described in the application activation information, and notifies the application execution unit 413 and the application-usage-information management controlling unit 420 of executing the application (activation control instruction). With such a configuration, for example, an application associated with an allocated channel is automatically activated, without operation by a user.

Further, upon reception of a selected application notification from the list controlling unit 408, the activation controlling unit 409a notifies the application obtaining unit 411, via the application-usage-information management controlling unit 420, of obtaining an application (application obtaining instruction) from the location of the application described in application activation information, and notifies the application execution unit 413 of executing the application (activation control instruction). Thus, a state that an application selected by the user from the list can be activated is obtained.

Incidentally, the activation controlling unit 409a is assumed to manage an application in activation by identification information (application ID), and write the application ID in activation into the activated application identification information storing unit 410. Further, in case that the application execution unit 413 has made an application activate another application (child application), if the parent application is associated with an allocated channel, the activation controlling unit 409a manages these applications, making the applications in hierarchal association, taking that the child application is also associated with the same allocated channel.

The termination controlling unit 409b performs termination control of an application in activation.

Concretely, upon reception of an activation information notification from the application activation information extracting unit 402a, the termination controlling unit 409b terminates an application if the application control code described in application activation information corresponding to the application ID that the termination controlling unit 409b is notified of together with the activation information notification, the application activation information being stored in the application activation information storing unit 405, is 'DESTROY', 'KILL', or 'KILLALL'.

Incidentally, if the application control code is 'DESTROYT', the termination controlling unit 409b instructs the application execution unit 413 and the application-usage-information management controlling unit 420 to normally terminate the application corresponding to the application ID that the termination controlling unit 409b has been notified of. If the application control code is 'KILL', the termination controlling unit 409b instructs the application execution unit 413 and the application-usage-information management controlling unit 420 to perform force termination of the application corresponding to the application ID that the termination controlling unit 409b has been notified of.

Incidentally, when terminating an application, the termination controlling unit 409b refers to the activated application identification information storing unit 410. If child applications are present on the application having been instructed to be terminated, the termination controlling unit 409b performs a terminating process sequentially from a lower child application, and terminates the parent application at a stage when a child application is no more present.

Further, if the application control code is 'KILLALL', the termination controlling unit 409b refers to the activated application identification information storing unit, and terminates all applications that are currently actuated. That is, if the application control code is 'KILLALL', the termination controlling unit 409b instructs the application execution unit 413 and the application-usage-information management controlling unit 420 to forcibly terminate all applications including, in addition to the application ID on which the termination controlling unit 409b has been notified of 'KILLALL', other applications in activation in association with an allocated channel and applications in operation not in association with the allocated channel.

Thus, for example, in case it is intended to broadcast a content as an emergent notification to viewers, such as emergency warning broadcast or emergency earthquake bulletin, the broadcaster notifies the integrated broadcasting communications receivers 400 of application activation information in which 'KILLALL' is described as application control so that priority use of resources such as a display screen can be made in emergency.

The reservation managing unit 409c performs control of reserving (installing) an application in advance in the integrated broadcasting communications receiver 400 (concretely the application storing unit 412).

Concretely, in case that, together with information (application ID) for specifying an application selected by the user from the list of applications that can be activated, when the reservation managing unit 409c is notified from list displaying unit 408a of that the application is to be reserved in the application storing unit 412, the reservation managing unit 409c notifies the application obtaining unit 411 via the application-usage-information management controlling unit 420 of obtaining the application from the location of the application, the location being described in the application activation information, and of writing the application into the application storing unit 412 (application obtaining instruction).

Thus, the application selected by the user is reserved in the application storing unit 412.

Incidentally, when the reservation managing unit 409c has reserved (installed) the application into the application storing unit 412, the reservation managing unit 409c updates the location (address), of the application, in the application activation information corresponding to the present application, the application activation information being stored in the application activation information storing unit 405, so that the address in the application storing unit 412 is referred to.

For example, the reservation managing unit 409c converts the address notation of the application described as 'http://∼' in the application activation information into 'file:///∼' or the like such as to indicate a local address in the application storing unit 412 (address in the application storing unit 412). Of course, instead of directly changing application activation information, it is also possible to separately describe a conversion rule for referring to the address of the application activation information by translation in reading, associating the conversion rule with application activation information.

Further, it is assumed that when the reservation managing unit 409c has reserved (installed) an application into the application storing unit 412, the reservation managing unit 409c writes and manages a state (reserved or not yet reserved) that the application is reserved in the application activation information storing unit 405.

On the other hand, the reservation managing unit 409c deletes reserved applications, according to instruction by the user. That is, applications stored in the application storing unit 412 are displayed in a list by a reserved application displaying unit (not shown) in the reservation managing unit 409c, and deleted from the application storing unit 412 by selection by the user by an application selecting/deleting unit (not shown). In this situation, the application selecting/deleting unit (not shown) sets the corresponding application reservation state to 'not reserved yet' in the application activation information storing unit 405.

With such a configuration of the application management/execution controlling unit 409, activation/termination of an application (channel-associated application) in association with an allocated channel service can be controlled by application activation information of a notification from the broadcast station. Further, an application (non-channel-associated application) not associated with an allocated channel can be obtained/executed by the user at an arbitrary timing.

The application obtaining unit 411 obtains an application from an application server 300 (see FIG. 1) connected to the communication line N via the communication transmitting/receiving unit 406.

When the application obtaining unit 411 is notified of an application obtaining instruction, from the activation controlling unit 409a via the application-usage-information management controlling unit 420, to obtain an application that does not require user authentication, the application obtaining unit 411 obtains the designated application from the location (address) of the application that the application obtaining unit 411 has been notified of by the above-described instruction, and outputs the obtained application to the application execution unit 413.

Further, when the application obtaining unit 411 is notified of an application obtaining instruction, from the reservation managing unit 409c via the application-usage-information management controlling unit 420, to obtain an application that does not require user authentication, the application obtaining unit 411 obtains the designated application from the location (address) of the application that the application obtaining unit 411 is notified of by the above-described instruction, and writes and reserves the obtained application into the reservation managing unit 409c.

The application storing unit 412 stores applications obtained by the application obtaining unit 411, and is a storage medium, such as a hard disk. The application storing unit 412 reserves an application in order to operate it at an arbitrary timing.

An application stored in the application storing unit 412 is read out and executed by the application execution unit 413.

The application execution unit 413 activates and terminates an application, based on an instruction (activation control instruction) from the application management/execution controlling unit 409.

When the application execution unit 413 is instructed by the activation controlling unit 409a to execute an application, the application execution unit 413 obtains the application and data (for example, metadata, icon date, etc.), which is necessary in executing the application, from the source of obtaining the application, based on information (application ID, location, etc.) that specifies the application included in the activation control instruction.

Then, the application execution unit 413 loads the application in a memory, not shown, and executes the application.

Incidentally, if the source of obtaining the application included in the activation control instruction is an address of a local disk (application storing unit 412) such as 'file:///∼', the application execution unit 413 reads out the application from the application storing unit 412 and executes the application. If the source of obtaining the application included in the activation control instruction is an address on a network such as 'http://∼', the application execution unit 413 instructs the application obtaining unit 411 to obtain this application (application obtaining instruction), thereby obtains the application, and executes the application.

Data of image and audio accompanying the execution of this application is output to the composing and displaying unit 415.

Further, when the application execution unit 413 is instructed by the termination controlling unit 409b to terminate an application that the application execution unit 413 is notified of, the application execution unit 413 terminates the application notified by the instruction.

Incidentally, the application execution unit 413 notifies the application in operation, from the termination controlling unit, for example, by an interruption signal or the like whether to normally terminate or to forcibly terminate the application, and thus terminates the application.

The operation controlling unit 414 controls user operation (for example, channel change, etc.) on the integrated broadcasting communications receiver 400, via an input unit such as an external remote controller Ri or the like.
When the operation controlling unit 414 is instructed by the user via the remote controller Ri to change the channel, the operation controlling unit 414 notifies the broadcast signal analysis unit 402 of a channel switching instruction including the channel number of a selected channel. Thus, the channel currently viewed is changed. Further, the operation controlling unit 414 also notifies the application management/execution controlling unit 409 of the channel switching instruction. Thus, it is possible to execute activation or termination of an application associated with an allocated channel. Further, accompanying execution of activation and termination of an application by the application management/execution controlling unit 409, information temporarily stored by the application-usage-information management controlling unit 420 is deleted, as described later.

As shown in FIG. 2, the integrated broadcasting communications receiver 400 is configured such that when power has been turned on or when an application is going to be obtained and executed, a list for specifying the viewing user individual is displayed on a video displaying device Mo so that the user individual is selected via the remote controller Ri. Herein, the integrated broadcasting communications receiver 400 is provided with the registered user storing unit 430, and for example, when a signal has been transmitted from the application management/execution controlling unit 409 to the application-usage-information management controlling unit 420, the application-usage-information management controlling unit 420 transmits a list stored in the registered user storing unit 430 to the composing and displaying unit 415 to make the video displaying device Mo display the list.

The registered user storing unit 430 stores individual identification information for identifying user individuals.
The registered user storing unit 430 stores individual identification information in advance in a list format (see FIG. 10 (a)) that user individuals, who have been input and registered via an initial input unit, not shown, can be recognized.
In the registered user storing unit 430, individual identification information is input and stored in advance via the operation controlling unit 414 from outside such as the remote controller Ri or the like such that, for example, individual identification information (the names of user individuals, or uniquely defined names, or the like), which can identify user individuals of a user family, can be displayed in a list.

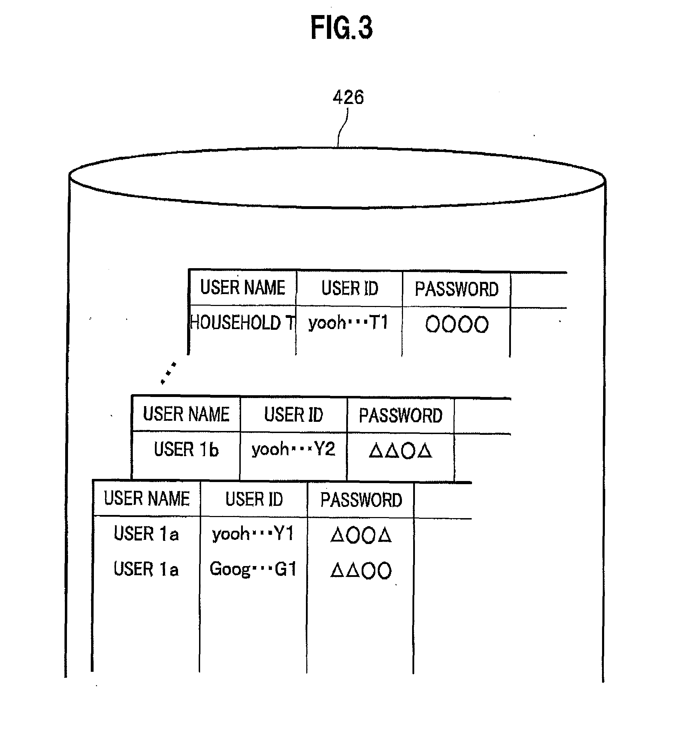

The integrated broadcasting communications receiver 400 is provided with the user account information storing unit 426 for storing pieces of user individual information corresponding to the pieces of individual identification information for identifying respective user individuals stored in the registered user storing unit 430. In the user account information storing unit 426 stores, as shown in FIG. 3, a user name representing individual identification information of a user individual, a user ID for an individual service, a password, and the like are linked with each other and thus stored. In the user account information storing unit 426, storage is made for the respectively pieces of individual identification information of user individuals.

As shown in FIG. 2, the application-usage-information management controlling unit 420 manages individual information of each user individual, who is a viewer, such that others cannot use it, and also enables easy operation by a user individual for an application that requires user authentication.

Upon reception of an application obtaining instruction from the application management/execution controlling unit 409 to obtain an application, the application-usage-information management controlling unit 420 issues an application obtaining instruction to the application obtaining unit 411, adding individual information.
Then, the application-usage-information management controlling unit 420 performs control to be able to obtain and execute the application, by responding to a request or the like from the application server 300 or the authentication server 500.
The application-usage-information management controlling unit 420 includes a session information management controlling unit 421, session information temporal storing unit 422, a user account management controlling unit 423, login user temporal storing unit 424, and a resource managing unit 425.

As shown in FIG. 2, the session information management controlling unit 421 controls certification information, authentication information, and session information between an application server 300 and the authentication server 500. The session information management controlling unit 421 extracts certification information from an authentication completion notification that the application server 300 is notified of by the authentication server 500 by redirecting, and controls the session information temporal storing unit 422 to store the certification information. Further, the session information management controlling unit 421 adds the stored certification information, reading it out from the session information temporal storing unit 422, to a user authentication request that the authentication server 500 is notified by the application server 300 by redirecting.

Upon reception of an application termination signal from the application management/execution controlling unit 409, the session information management controlling unit 421 deletes the certification information stored in the session information temporal storing unit 422, based on the application termination signal.
Incidentally, as certification information is a password (certificate, finger print data or the like) corresponding to an application, the certification information can be identified by receiving an application termination signal. Further, session information is a unique code, of a communication path, issued for the communication path between the application server 300 and the integrated broadcasting communications receiver 400, wherein the application server 300 has obtained user confirmation of the user individual by authentication information being data having a user individual ID and certification information in a pair that certifies a valid user individual for the application.

The session information management controlling unit 421 includes a certification information extracting unit 421a, a certification information adding unit 421b, and an address changing unit 421c.

The certification information extracting unit 421a extracts certification information added to an authentication completion notification redirected from the authentication server 500 to an application server 300. In case that certification information issued by the authentication server 500 is added to redirected data, the certification information extracting unit 421a extracts the certification information, and makes the session information temporal storing unit 422 store the certification information. Further, if session information issued by the application server 300 is added to the redirect, the certification information extracting unit 421a extracts the session information together with the certification information, and makes the session information temporal storing unit 422 store the session information.

The certification information adding unit 421b adds certification information to a user authentication request. If certification information that is stored in the session information temporal storing unit 422 is present, the certification information adding unit 421b adds the certification information to a user authentication request from the application server 300. Further, if session information is stored in the session information temporal storing unit 422, the certification information adding unit 421b adds and uses the session information in obtaining or executing an application. Incidentally, if plural pieces of certification information are stored in a list format in the session information temporal storing unit 422, the certification information adding unit 421b adds the certification information stored last in the list to a user authentication request. Further, if session information stored in the session information temporal storing unit is stored in a list format, session information corresponding to an application is used, the session information being stored in the list.

Based on a rewriting instruction described in a redirect, the address conversion section 421c converts the transmitted URL of the redial destination. Herein, upon reception of a redirect from an application server 300, the address changing unit 421c changes the transmission destination to the authentication server 500, and also upon reception of a redirect from the authentication server 500, the address changing unit 421c changes the transmission destination to the application server 300, in response to a rewriting instruction expressed in a redirect.

The session information temporal storing unit 422 is configured by a nonvolatile memory or the like that temporarily stores extracted certification information and session information.

In the session information temporal storing unit 422, herein, certification information temporarily stored is deleted upon reception of an application completion signal from the application management/execution controlling unit 409.

The user account management controlling unit 423 controls and manages the piece of individual information of each user individual to prevent leakage of the individual information to others. The user account management controlling unit 423 operates so that the application management/execution controlling unit 409 and the application obtaining unit 411 can obtain and execute an application in collaboration. Herein, when power is turned on, the user account management controlling unit 423 outputs a list stored in the registered user storing unit 430 to the composing and displaying unit 415, and displays the list on the video displaying device Mo (see FIG. 10 (a)). Then, when individual identification information representing a user individual has been selected by button operation from the remote controller device Ri via the operation controlling unit 414, the user account management controlling unit 423 controls the login user temporal storing unit 424 to temporarily store the selected individual identification information.

Incidentally, although the timing of performing user individual selection is arbitrary, description will be made below on assumption that user individual selection is performed when the power of the integrated broadcasting communications receiver 400 is turned on. Further, upon reception of an application obtaining instruction from the application management/execution controlling unit 409, the user account management controlling unit 423 reads out user identification information stored in the login user temporal storing unit 424, extracts individual information of the user individual corresponding to this user identification information via the resource managing unit 425, the individual information of the user individual being stored in advance in the user account information storing unit 426, adds the individual information of the user individual to the application using request, and outputs to an application obtaining unit 411.

The resource managing unit 425 manages user individual information stored in the user account information storing unit 426. Upon reception of individual identification information via the user account management controlling unit 423, the individual identification information being temporarily stored in the login user temporal storing unit 424, the resource managing unit 425 selects user individual information that is corresponding to the above-described individual identification information and stored in the user account information storing unit 426, and outputs the selected user individual information to the user account management controlling unit 423.

The composing and displaying unit 415 synthesizes one or more of the application list (see FIG. 10 (b), the application (see FIG. 10 (d)), the user individual selecting screen (see FIG. 10 (a)), and the login screen (see FIG. 10 (c)) with video, and displays on the image display device Mo. The composing and displaying unit 415 outputs synthesized audio as an audio signal to an audio output device Sp such as a speaker connected outside, and outputs synthesized video (image) as a video signal to a video displaying device Mo such as a liquid crystal display connected outside. The composing and displaying unit 415 performs displaying video on the video displaying device Mo, synthesizing video audio data from the video/audio decoding unit 403, data of data broadcast from the data broadcast decoding unit 404, data of applications from the application execution unit 413, and data of input screens (a user individual selecting screen and a login screen) that is output by instruction from the application-usage-information management controlling unit.

The composing and displaying unit 415 can recognize at which position of video data and in what shape a synthesis should be made, from data of the initial display position, the display shape, the color, the display area, and the like that each application has. Accordingly, based on data for displaying video by these applications, the composing and displaying unit 415 synthesizes the video of the applications into video data and displays a result. Also for another application list, another user individual selecting screen, and another login screen, the composing and displaying unit 415 makes synthesis, on the video displaying device Mo, at a certain position of video or the like that is already displayed, based on data such as the initial display position, the display shape, the color, the display area, and the like that each of the above has, or based on predetermined conditions.

With arrangement as described above, on the integrated broadcasting communications receiver 400, the application-usage-information management controlling unit 420 can manage user individual information of each user individual so that the user individual information is prevented from leaking to others, and can perform control so as to obtain and execute an application that requires user authentication, responding to requirement by an application server 300 or the authentication server 500.

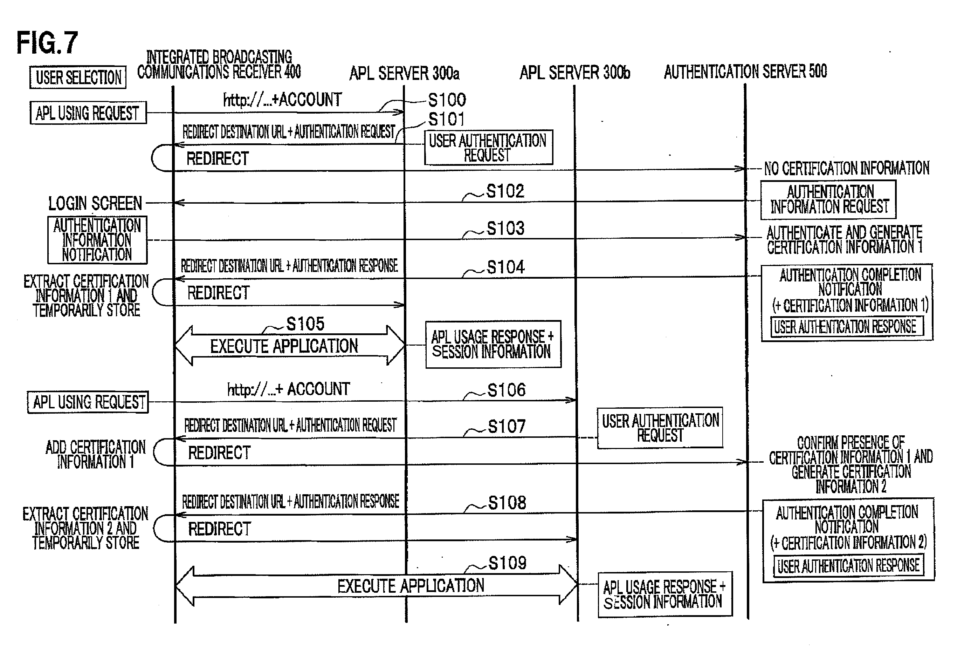

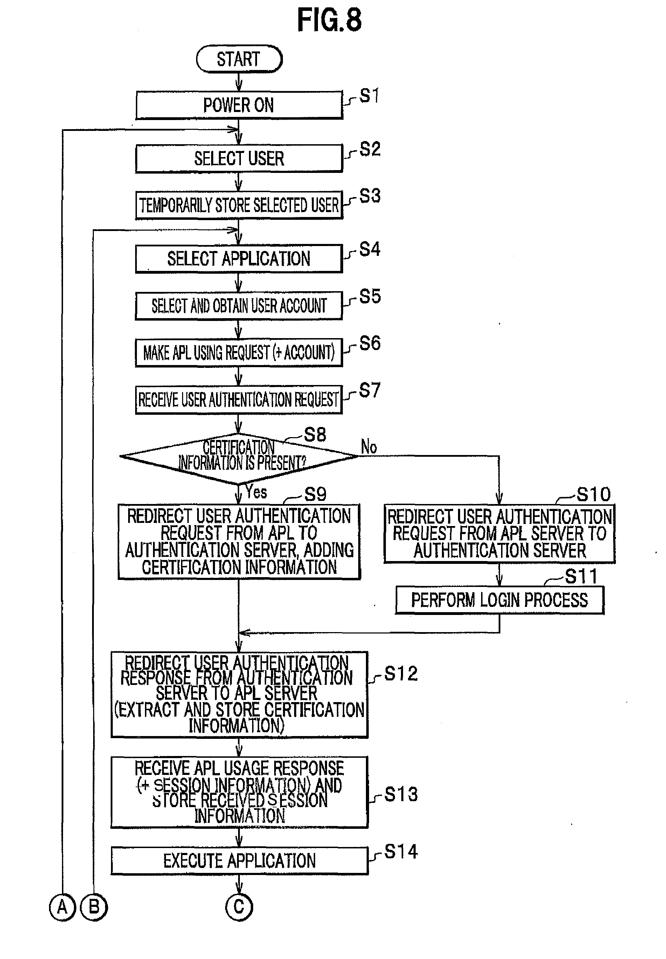

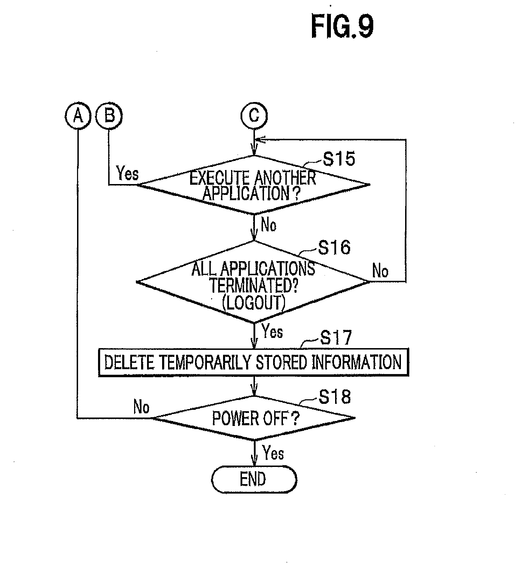

The operation of the integrated broadcasting communications receiver 400 will be described below. Incidentally, the following description will be made on the configuration of the integrated broadcasting communications receiver and the like with reference to FIGS. 1 to 3 as appropriate, on the entire operation of the integrated broadcasting communications system 1 with reference to FIG. 7, and on the operation of the integrated broadcasting communications receiver with reference to FIGS. 8 and 9. Further, a schematic video state displayed on the video displaying device Mo will be described with reference to FIG. 10. Still further, the operation of the integrated broadcasting communications receiver 400 will be described, as shown in FIG. 7, on assumption of taking an example of requesting applications respectively from the first application server 300a and the second Application server 300b.

As shown in FIG. 8, when first the power of the integrated broadcasting communications receiver 400 is turned on (step S1), a signal is input to the application-usage-information management controlling unit 420, and upon instruction from the user account management controlling unit 423, a user individual selecting screen (see FIG. 10 (a)) that is stored in advance in the registered user storing unit 430 is displayed on the video displaying device Mo. Accordingly, user selection is performed by the remote controller Ri via the operation controlling unit 414 from a list in which individual identification information of user individuals who view the integrated broadcasting communications receiver 400 is described (step S2). Then, the user identification information of a user individual selected via the operation controlling unit 414 is transmitted to the user account management controlling unit 423 of the application-usage-information management controlling unit 420. The user account management controlling unit 423 controls the login user temporal storing unit 424 to temporarily store the received personal identification information (selected user) (step S3). Further, when power is turned on, the integrated broadcasting communications receiver 400 receives broadcast wave W from antenna A via the broadcast receiving unit 401.

Then, the integrated broadcasting communications receiver 400: analyzes PSI/SI of stream data demodulated by the broadcast signal analysis unit 402; extracts data of video, audio, data broadcast and the like; outputs data in PES format, which is the extracted data of video, audio and the like, to the video/audio decoding unit 403 of the decoding unit 40; and outputs data in section format, which is the extracted data of data broadcast or the like, to the data broadcast decoding unit 404 of the decoding unit 40. Further, the integrated broadcasting communications receiver 400 analyzes EIT and extracts application activation information by the application activation information extracting unit 402a, and outputs the application activation information to the application activation information storing unit 405 to store the application activation information.

Then, as shown in FIGS. 7 and 8, on the integrated broadcasting communications receiver 400, in case of activating an application, the list controlling unit 408 is controlled to output an application list to the composing and displaying unit 415 so that the application list is displayed on the video displaying device Mo (see FIG. 10 (b)), and an application is selected from the displayed application list from the remote controller Ri via the operation controlling unit 414 (step S4). When an application is selected, a selected application notification is transmitted from the list controlling unit 408 to the application management/execution controlling unit 409, and an application obtaining instruction to obtain the application is transmitted from the application management/execution controlling unit 409 to the application-usage-information management controlling unit 420. Upon reception of the application obtaining instruction, the application-usage-information management controlling unit 420 controls the user account management controlling unit 423 to transfer individual identification information temporarily stored in the login user temporal storing unit 424 to the resource managing unit 425.

Upon reception of the individual identification information, the resource managing unit 425 selects and obtains user individual information corresponding to the individual identification information from the user account information storing unit 426 (step S5).
The user account management controlling unit 423 receives the user individual information obtained by the resource managing unit 425, and transmits the user individual information to the application obtaining unit 411 via the session information management controlling unit 421.
Then, the session information management controlling unit 421 notifies the application obtaining unit 411 of the user individual information (account) to add the user individual information to an application using request (step S6), and transmits the application using request from the application obtaining unit 411 to the application server 300a via the communication transmitting/receiving unit 406 to request the application (S100 in FIG. 7).

Upon reception of the application using request, the application server 300a transmits an authentication request, which is added to the redirect destination URL, as a user authentication request to the authentication server 500 via the integrated broadcasting communications receiver 400 (S101 in FIG. 7). The integrated broadcasting communications receiver 400, which a redirect goes through, receives the user authentication request by the redirect (step S7). Then, on the integrated broadcasting communications receiver 400, the session information management controlling unit 421 confirms whether or not certification information is stored in the session information temporal storing unit 422 (step S8).

Then, on the integrated broadcasting communications receiver 400, if certification information is not present (No in step S8), the address changing unit 421c changes the redirect destination URL to the URL of the authentication server 500, and the user authentication request from the application server 300a is transmitted to the authentication server 500. The authentication server 500 confirms that certification information is not present in the received redirected user authentication request, and makes an authentication information request to the integrated broadcasting communications receiver 400 (S102 in FIG. 7). When the communication transmitting/receiving unit 406 has received and accepted the authentication information request transmitted from the authentication server 500 and the integrated broadcasting communications receiver 400 has thus accepted the authentication information request, a login screen (see FIG. 10 (c)) is output from the user account management controlling unit 423 of the application-usage-information management controlling unit 420 to the composing and displaying unit 415. Then, a password is input from the remote controller Ri via the operation controlling unit 414, a login process is performed (step S11), and the authentication information notification (password) is transmitted to the authentication server 500 (S103 in FIG. 7).

The authentication server 500, which has received the authentication information notification, performs authentication on the authentication information notification, creates a certification information 1 if authentication has been made, and transmits a user authentication response, to which the certification information 1 created as a authentication completion notification is added, to the application server 300a by redirect via the integrated broadcasting communications receiver 400 (S104 in FIG. 7).

On the integrated broadcasting communications receiver 400, the certification information extracting unit 421a extracts the certification information 1 in the redirected user authentication response; the session information temporal storing unit 422 temporarily stores the certification information 1; the address changing unit 421c changes the redirect destination URL to the URL of the application server 300a; and the user authentication response from the authentication server 500 is transmitted to the application server 300a (step S12).

Upon reception of the redirected user authentication response, the application server 300a issues session information, and transmits data so that the application can be executed on the integrated broadcasting communications receiver 400 by an application usage response (S105 in FIG. 7). In this situation, on the integrated broadcasting communications receiver 400, the certification information extracting unit 421a extracts the issued session information; the session information temporal storing unit 422 stores the session information (step S13); and the session information is used, as appropriate, when the application is executed (step S14). On the integrated broadcasting communications receiver 400, when the application is executed, video from broadcast and application Ap from communication are synthesized to be displayed on the video displaying device Mo, for example as shown in FIG. 10 (d).

Further, when executing another application (Yes in step S15), the integrated broadcasting communications receiver 400 executes the above-described steps S4 to S7. Upon reception of an application using request transmitted from the integrated broadcasting communications receiver 400 (S106 in FIG. 7), an application server 300b transmits a user authentication request to the authentication server 500 via the integrated broadcasting communications receiver 400 by redirect (step S107 in FIG. 7). On the integrated broadcasting communications receiver 400 having received the user authentication request, as the certification information 1 is already stored in the session information temporal storing unit 422 (Yes in step S8), the certification information adding unit 421b of the session information management controlling unit 421 adds the certification information 1, which is stored in the session information temporal storing unit 422, to the user authentication request; the address changing unit 421c rewrites the destination URL for redirect; and the user authentication request transmitted from the application server 300b is redirected to the authentication server 500.

As the certification information 1 is added to the user authentication information, the authentication server 500, which has received the user authentication request, confirms the certification information 1 to thereby determine that the user individual on which a user authentication request has already been made is already authenticated, and creates certification information 2. Then, the authentication server 500 transmits a user authentication response, for which the certification information 2 is added to an authentication completion notification, to the application server 300b via the integrated broadcasting communications receiver 400 by redirect (S108 in FIG. 7).

On the integrated broadcasting communications receiver 400, the certification information extracting unit 421a extracts the certification information 2 from the received user authentication response; the session information temporal storing unit 422 stores the certification information 2; the address changing unit 421c rewrites the redirect destination URL to the URL of the application server 300b; and the authentication information 2 is thus transmitted to the application server 300b (step S12).

Then, the application server 300b, which has received the user authentication response, issues session information in response to the redirected user authentication response, and transmits data so that the application can be executed on the integrated broadcasting communications receiver 400 by an application usage response (S109 in FIG. 7). In this situation, on the integrated broadcasting communications receiver 400, the certification information extracting unit 421a extracts the issued session information; the session information temporal storing unit 422 stores the session information (step S13); and the session information is used, as appropriate, when the application is executed (step S14).

In this situation, in the operation in steps S8 and S9, on the integrated broadcasting communications receiver 400, if login processing is performed once during the time from when the power is turned on until the power is turned off, a next application can be used without performing login processing at the second time and after in executing this application. On the integrated broadcasting communications receiver 400, in case of executing still another application in step S15, the application can be executed by performing the operation in steps S4 to S9 and S12 to S14 without performing login processing and in a state of protecting user individual information, in other words, so-called single sign-on (SSO) can be realized.

Then, on the integrated broadcasting communications receiver 400, in terminating application (Yes in step S16), the application execution unit 413 and the application-usage-information management controlling unit 420 receive an application termination signal from the application management/execution controlling unit 409, and the application is terminated by the termination signal from the application execution unit 413. Further, in the application-usage-information management controlling unit 420 having received the termination signal, the session information management controlling unit 421 deletes the session information and the certification information stored in the session information temporal storing unit 422 (step S17), and the user account management controlling unit 423 deletes the individual identification information stored in the login user temporal storing unit 424 (step S17). Then, if power is turned off (step S18), operation is terminated, and if power is not turned off (No in step S18), the operation from step S2 is repeated. This case of No in step S18 is a case that a selected user individual is changed on the integrated broadcasting communications receiver 400.

As has been described above, as the integrated broadcasting communications receiver 400 includes the application-usage-information management controlling unit 420 and the user account information storing unit 426 in addition to the application management/execution controlling unit 409 and the application obtaining unit 411, the integrated broadcasting communications receiver 400 is capable of receiving broadcast/communication linking services in a state of protecting user individual information of user individuals and is excellent in operability that enables operation of SSO in executing an application that requires user authentication.

Further, on the integrated broadcasting communications receiver 400, in case of obtaining and executing an application that does not require user authentication, the application can be executed in a state that operation is performed, for example, at household T for an object of user selection (see FIG. 3 and FIG. 10 (a)) and data is not delivered to/from the authentication server 500, in other words, an application can be executed by executing steps S100 and S105 in FIG. 7.

Although it has been described that the integrated broadcasting communications receiver 400 stores a user individual selection screen in advance as a list in the registered user storing unit 430, the user individual selection screen may be transmitted by a carousel of broadcast wave W. Further, although it has been described that the integrated broadcasting communications receiver 400 displays a user individual selection screen when power is turned on, the user individual selection screen may be displayed when a user authentication request transmitted from an application server 300 is received. Further, on the integrated broadcasting communications receiver 400, the timing of deleting information stored in the session information temporal storing unit 422 and the login user temporal storing unit may be set to a time when power has been turned off.

Still further, the integrated broadcasting communications receiver 400 has been described above by an example in which application activation information for activating an application is transmitted, being described in EIT of broadcast wave W, however, arrangement may be made such that application activation information is transmitted, being described in a signal for carousel in a section format as data for data broadcast and the like, and extracted by application activation information extracting unit 404a of the data broadcast decoding unit 404 to be stored in the application activation information storing unit 405. Further, instead of transmitting application activation information for activating an application by broadcast wave W, transmitting application activation information may be obtained by the application activation information obtaining unit 407 via the communication transmitting/receiving unit 406 and stored in the application activation information storing unit 405.

That is, the integrated broadcasting communications receiver 400 may be configured such as to obtain application activation information by whatever means.
Further, an application may be of any kind, such as an application that can be activated in association with an allocated channel, an application not in association with an allocated channel, an application that can be independently activated, or the like.

Still further, as shown in FIG. 1, the integrated broadcasting communications receiver 400 may be configured to link with a mobile device 600, such as a mobile phone, thereby enable operation from the mobile device 600, and thus perform operation including a request of an application, termination of the application and the like.
Also with operation such as to execute an application via the mobile device 600, protection of individual information and operation of SSO can be likewise performed as described above.

Incidentally, the functions of the integrated broadcasting communications receiver 400 in the foregoing embodiment may be realized by a computer. That is, the integrated broadcasting communications receiver 400 can operate a computer by programs which are to function as the above-described respective unit.
In this case, arrangement can be made such that programs are recorded in a computer readable recording medium, and the programs recorded in the recording medium are read by a computer system and executed to thereby function.
Incidentally, 'a computer system' referred to herein is assumed to include an OS and hardware such as a peripheral device. Further, 'a computer readable recording medium' refers to a transportable medium, such as a flexible disk, a photomagnetic disk, a ROM, a CD-ROM or the like, or a storage device, such as a hard disk built in a computer system.

Further, 'a computer-readable recording medium' may be one that dynamically holds a program for a short time, such as a communication line in a case of transmitting a program via a network, the Internet for example, a telephone line, or the like, or one that holds a program for a certain time, such as a volatile memory in a computer system that is a server or a client of this case. Still further, a program as described above may be one for implementing a part of the above-described functions, and may be one that can implement the above-described functions by a combination with a program that is already recorded in a computer system.

### Description of Reference Symbols

1: integrated broadcasting communications system
40: decoding unit
100: broadcast transmitting apparatus
200: repository server
300: application server
400: integrated broadcasting communications receiver
401: broadcast receiving unit
402: broadcast signal analysis unit
402a: application activation information extracting unit
403: video/audio decoding unit
404: data broadcast decoding unit
404a: application activation information extracting unit
405: application activation information storing unit
406: communication transmitting/receiving unit
407: application activation information obtaining unit
408: list controlling unit
409: execution controlling unit
409a: activation controlling unit
409b: termination controlling unit
409c: reservation managing unit
410: activated application identification information storing unit
411: application obtaining unit
412: application storing unit
413: application execution unit
414: operation controlling unit
415: composing and displaying unit
420: application-usage-information management controlling unit
421: session information management controlling unit
421a: certification information extracting unit
421b: certification information adding unit
421c: address changing unit
422: session information temporal storing unit
423: user account management controlling unit
424: login user temporal storing unit
425: resource managing unit
426: user account information storing unit
430: registered user storing unit
500: authentication server
600: mobile device
A: antenna
Mo: video displaying device
N: communication line
Ri: remote controller
Sp: audio output device
W: broadcast wave

## Claims

1. An integrated broadcasting communications receiver having a broadcast receiving unit for receiving broadcast data via a broadcast wave, a communication transmitting/receiving unit that is connected with an application server for providing an application and transmits/receives communication data via a communication line connected with an authentication server for performing user individual authentication for execution of the application, a decoding unit for decoding video/audio and data broadcast from the broadcast data received by the broadcast receiving unit, and a composing and displaying unit for composing video decoded by the decoding unit and video created by the application, the integrated broadcasting communications receiver comprising:
an application activation information extracting unit for extracting, from information received via the broadcast receiving unit, application activation information that includes control information for controlling execution operation of the application and obtaining-source information indicating an obtaining-source of the application;
an application activation information storing unit for storing the application activation information extracted by the application activation information extracting unit;
an application obtaining unit for obtaining the application via the communication transmitting/receiving unit, from the obtaining-source indicated by the obtaining-source information included in the application activation information;
an application management/execution controlling unit for controlling execution-operation of the application, according to the application activation information corresponding to the application obtained by the application obtaining unit;
an application execution unit for executing the application by an instruction from the application management/execution controlling unit;
a user account information storing unit for storing user individual information including user account information for each application server and the authentication server, wherein each piece of the user individual information is stored for a corresponding piece, of individual identification information, that identifies a user individual; and
an application-usage-information management controlling unit for making an obtaining request for an application to an application server via the application obtaining unit, by an instruction from the application management/execution controlling unit, and for controlling a specified piece of the user individual information, in response to a request by the application server and the authentication server,
wherein, the application-usage-information management controlling unit performs control such that, when a user individual is selected and specified from outside, the specified piece of the individual identification information is temporarily stored until the application is terminated, and that, in response to a request by the application server or the authentication server, a piece of the user individual information corresponding to the specified piece of the individual identification information is selected from the user account information storing unit to respond to the request so that the application can be executed.

2. The integrated broadcasting communications receiver according to claim 1,
wherein the application-usage-information management controlling unit comprises:
a login user temporal storing unit for temporarily storing the piece of the individual identification information selected and specified from outside; and
a user account management controlling unit for performing control such that the login user temporal storing unit temporarily stores the specified piece of the individual identification information, and that a piece of the user individual information corresponding to the piece of the individual identification information, the piece of individual identification information being stored in the login user temporal storing unit, is selected from the user account information storing unit and added to an application using request made to the application server.

3. The integrated broadcasting communications receiver according to claim 2,
wherein the application-usage-information management controlling unit further comprises:
a session information temporal storing unit for temporarily storing certification information that is a result of authentication by the authentication server, the result being extracted from an authentication completion notification that the application server is notified of by the authentication server via the receiving apparatus; and
a session information management controlling unit that extracts the certification information from the authentication completion notification, controls the session information temporal storing unit to store the certification information, and adds the certification information stored in the session information temporal storing unit to a user authentication request from the application server.

4. The integrated broadcasting communications receiver according to claim 3,
wherein, upon reception of an application termination signal for terminating the application in the execution operation from the application management/execution controlling unit, the user account management controlling unit and the session information management controlling unit delete the piece of the individual identification information that is temporarily stored in the login user temporal storing unit and is corresponding to the application, and deletes the certification information that is temporarily stored in the session information storing unit and is corresponding to the application.

5. An integrated broadcasting communications system that is connected with a communication line to integrate broadcasting and communication, comprising:
an application server that is connected to the communication line and provides an application;
an authentication server that is connected to the communication line and performs user individual authentication for execution of the application;
the integrated broadcasting communications receiver according to any one of claims 1 to 4; and
a broadcast transmitting apparatus that transmits broadcast data to the integrated broadcasting communications receiver.
